# EUROPEAN PATENT APPLICATION

(11) **EP 4 340 430 A1**
(43) Date of publication of application: **20.03.2024**
(21) Application number: 21941127.9
(22) Date of filing: 10.05.2021
(51) Int. Cl.: H04W 24/02

(54) **COORDINATION CELL BEAM MEASUREMENT METHOD AND APPARATUS, AND COMMUNICATION DEVICE**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/092692
(87) International publication number: WO 2022/236551

(57) **Abstract**

Provided in the present disclosure are a coordination cell beam measurement method and apparatus, and a communication device, belonging to the technical field of wireless communications. The coordination cell beam measurement method comprises: a user equipment (UE) receiving indication information sent by a network device, wherein the indication information comprises a first sending power of a coordination cell; performing beam measurement on the coordination cell; and obtaining a first beam measurement result of the coordination cell according to the first sending power. Therefore, the UE can perform beam measurement on the coordination cell to acquire a beam measurement result of the coordination cell, and the UE determines the beam measurement result of the coordination cell in view of a sending power of the coordination cell, such that the accuracy and timeliness of the beam measurement result can be ensured.

## Description

### FIELD

The present disclosure relates to the technical field of wireless communication, and more particularly to a coordination cell beam measurement method, a coordination cell beam measurement apparatus, and a communication device.

### BACKGROUND

In a new radio (NR), especially when a communication frequency band is in a frequency range of 2, beam-based transmission and reception may be used to ensure the coverage of signals due to fast attenuation of a high frequency channel.

When a user equipment (UE) moves to an edge of a serving cell, it may happen that performance of a serving cell measured on an antenna panel#1 is good, and performance of a neighboring cell measured on a panel#2 is good, or that performance of a serving cell measured on a beam #1 is good, and performance of a neighboring cell measured on a beam #2 is good. The beam #1 and the beam #2 may correspond to a same antenna panel of the UE or to different antenna panels of the UE.

In this case, in case that the UE wants to stay in the serving cell or switch to a neighboring cell, a throughput is not optimal. The reason for this is that the UE may be in an overlapping position of the coverage of the above-mentioned two cells, and a situation may occur where performance of the serving cell is good for a while and performance of the neighboring cell is good for a while. In view of the above-mentioned situation, an optimal way is that different cells perform a data transmission for the UE based on beams at the same time, and the beams are switched dynamically. In this way, the UE is needed to be able to perform a beam measurement on the neighboring cell. In addition, even if the UE is to be switched to the neighboring cell, in order to achieve a fast handover, the UE is needed to measure beam performance of the neighboring cell in advance, so that a target base station may quickly use a better beam to transmit data to the UE. However, there is no a beam measurement method for the neighboring cell at present.

### SUMMARY

A first aspect of embodiments of the present disclosure provides a coordination cell beam measurement method. The method is applied to a user equipment (UE) and includes receiving indication information sent by a network device, in which the indication information includes a first transmission power of a coordination cell, performing a beam measurement on the coordination cell, and obtaining a first beam measurement result of the coordination cell according to the first transmission power.

Additionally, the method further includes determining a beam measurement reference signal resource of the coordination cell, and obtaining a second beam measurement result of the coordination cell according to the beam measurement reference signal resource of the coordination cell.

Additionally, the first beam measurement result is obtained according to the second beam measurement result and the first transmission power.

Additionally, the method further includes sending a beam measurement result to the network device, in which the beam measurement result includes at least one of the first beam measurement result, or the second beam measurement result.

Additionally, the beam measurement result further includes a beam measurement result of a serving cell.

Additionally, the beam measurement result of the serving cell includes a third beam measurement result of the serving cell and/or a fourth beam measurement result of the serving cell.

Additionally, the method further includes determining a beam measurement reference signal resource of the serving cell, and performing a beam measurement according to the beam measurement reference signal resource of the serving cell to obtain the third beam measurement result of the serving cell.

Additionally, the method further includes receiving transmission power information of the serving cell, and obtaining the fourth beam measurement result of the serving cell according to the third beam measurement result of the serving cell and the transmission power information of the serving cell.

Additionally, a manner for reporting the beam measurement result includes at least one of periodic reporting, non-periodic reporting, or semi-persistent reporting.

Additionally, the beam measurement result is reported by at least one group.

Additionally, each group in the at least one group corresponds to at least one of a beam group identifier (ID), a physical cell identifier (PCI), a control resource set pool index (CORESETPoolIndex), a reference signal resource set ID, a reference signal resource ID, a transmission reception point (TRP) ID, or an antenna panel ID.

Additionally, beams in the group are beams which can be received by the UE simultaneously, or beams between different groups are beams which can be received by the UE simultaneously.

Additionally, sending the beam measurement result to the network device includes sending the beam measurement result to the network device, in response to a reporting condition being satisfied.

Additionally, the method further includes the beam measurement result including at least one of a layer 1-reference signal receiving power (L1-RSRP), a layer 1-signal to interference plus noise ratio (L1-SINR), a correction value of a L1-RSRP based on the first transmission power of the coordination cell, a correction value of a L1-SINR based on the first transmission power of the coordination cell, a correction value of a L1-RSRP based on an uplink transmission power of the UE, or a correction value of a L1-SINR based on an uplink transmission power of the UE.

Additionally, the first transmission power of the coordination cell includes at least one of a transmission power value of the coordination cell, or a difference between the transmission power of the coordination cell and a transmission power of a serving cell.

Additionally, the reporting condition is a beam measurement result of the coordination cell being greater than a first threshold.

Additionally, the reporting condition is sorting the beam measurement results of the coordination cell and the beam measurement results of the serving cell from strong to weak, in which the beam measurement results of the coordination cell are top N beam measurement results, where N is a positive integer.

Additionally, the reporting condition is sorting the beam measurement results of the coordination cell from strong to weak, and reporting top M beam measurement results of the coordination cell, where M is a positive integer.

A second aspect of embodiments of the present disclosure provides a coordination cell beam measurement method. The method is applied to a network device and includes sending indication information to a user equipment (UE), in which the indication information includes a first transmission power of a coordination cell, in which the UE obtains a first beam measurement result of the coordination cell according to the first transmission power.

A third aspect of embodiments of the present disclosure provides a coordination cell beam measurement apparatus. The apparatus includes a receiving module configured to receive indication information sent by a network device, in which the indication information includes a first transmission power of a coordination cell, a measuring module configured to perform a beam measurement on the coordination cell, and an acquiring module configured to acquire a first beam measurement result of the coordination cell according to the first transmission power.

A fourth aspect of embodiments of the present disclosure provides a coordination cell beam measurement apparatus. The apparatus includes a sending module configured to send indication information to a user equipment (UE), in which the indication information includes a first transmission power of a coordination cell, in which the UE acquires a first beam measurement result of the coordination cell according to the first transmission power.

A fifth aspect of embodiments of the present disclosure provides a communication device. The communication device includes a transceiver, a memory, and a processor connected to the transceiver and the memory, respectively, and configured to control wireless signal transmission and reception of the transceiver and be capable of implementing the coordination cell beam measurement method provided in the first aspect of the embodiments of the present disclosure, or the coordination cell beam measurement method provided in the second aspect of the embodiments of the present disclosure by executing computer-executable instructions on the memory.

A sixth aspect of embodiments of the present disclosure provides a computer storage medium having stored therein computer-executable instructions that, after executed by a processor, cause the coordination cell beam measurement method provided in the first aspect of the embodiments of the present disclosure, or the coordination cell beam measurement method provided in the second aspect of the embodiments of the present disclosure to be implemented.

A seventh aspect of embodiments of the present disclosure provides a computer program product. The computer program product includes a computer program that, when executed by a processor, causes the processor to implement the coordination cell beam measurement method provided in the first aspect of the embodiments of the present disclosure, or the coordination cell beam measurement method provided in the second aspect of the embodiments of the present disclosure.

The coordination cell beam measurement method, the coordination cell beam measurement apparatus, and the communication device are provided in the embodiments of the present disclosure. The user equipment (UE) receives the indication information sent by the network device, in which the indication information includes the first transmission power of the coordination cell, performs the beam measurement on the coordination cell, and obtains the first beam measurement result of the coordination cell according to the first transmission power. Therefore, the UE may perform the beam measurement on the coordination cell, and acquire the beam measurement result of the coordination cell, and the UE determines the beam measurement result of the coordination cell in combination with the transmission power of the coordination cell, thus ensuring the accuracy and timeliness of the beam measurement result.

Additional aspects and advantages of the present disclosure will be set forth, in part, in the following description, and in part will be apparent from the following description, or learned by practice of the present disclosure.

### BRIEF DESCRIPTION OF THE DRAWINGS

The above-mentioned and/or additional aspects and advantages of the present disclosure will be apparent and readily understood from the following description of embodiments taken in conjunction with the accompanying drawings.
FIG. 1 is a flow chart of a coordination cell beam measurement method provided in an embodiment of the present disclosure.
FIG. 2 is a flow chart of another coordination cell beam measurement method provided in an embodiment of the present disclosure.
FIG. 3 is a flow chart of another coordination cell beam measurement method provided in an embodiment of the present disclosure.
FIG. 4 is a flow chart of another coordination cell beam measurement method provided in an embodiment of the present disclosure.
FIG. 5 is a flow chart of another coordination cell beam measurement method provided in an embodiment of the present disclosure.
FIG. 6 is a flow chart of another coordination cell beam measurement method provided in an embodiment of the present disclosure.
FIG. 7 is a flow chart of another coordination cell beam measurement method provided in an embodiment of the present disclosure.
FIG. 8 is a flow chart of another coordination cell beam measurement method provided in an embodiment of the present disclosure.
FIG. 9 is a flow chart of another coordination cell beam measurement method provided in an embodiment of the present disclosure.
FIG. 10 is a flow chart of another coordination cell beam measurement method provided in an embodiment of the present disclosure.
FIG. 11 is a flow chart of another coordination cell beam measurement method provided in an embodiment of the present disclosure.
FIG. 12 is a schematic diagram of a coordination cell beam measurement apparatus provided in an embodiment of the present disclosure.
FIG. 13 is a schematic diagram of another coordination cell beam measurement apparatus provided in an embodiment of the present disclosure.
FIG. 14 is a block diagram of a user equipment (UE) provided in an embodiment of the present disclosure.
FIG. 15 is a schematic diagram of a network device provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are merely for the purpose of describing specific embodiments, but should not be construed to limit the present disclosure. As used in the embodiments of the present disclosure and the appended claims, "a/an," and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are merely used for distinguishing information of the same type from each other. For example, first information may also be referred to as second information, and similarly, the second information may also be referred to as the first information, without departing from the scope of embodiments of the present disclosure. As used herein, the term "if," and "in case that" may be construed to mean "when" or "upon" or "in response to determining" depending on the context.

Embodiments of the present disclosure are described in detail below, examples of which are illustrated in the accompanying drawings. The same or similar reference numerals represent the same or similar elements throughout the descriptions. The embodiments described below with reference to the accompanying drawings are illustrative, and are intended to explain the present disclosure and cannot be construed as limiting the present disclosure.

In a new radio (NR), especially when a communication frequency band is in a frequency range of 2, beam-based transmission and reception may be used to ensure the coverage of signals due to fast attenuation of a high frequency channel. At present, both a base station and a user equipment (UE) use one panel to transmit and receive data.

When a base station has multiple transmission reception points (TRPs), and each TRP has one or multiple transmission panels, or when a base station has merely one TRP and the TRP has multiple transmission panels, the base station may use multiple panels (the multiple panels may come from a same TRP or different TRPs) to send data to a same UE at the same time. Similarly, when a UE has multiple panels, the UE may use multiple panels to send data to the base station.

When a UE moves to an edge of a serving cell, it may happen that performance of a serving cell measured on an antenna panel#1 is good, and performance of a neighboring cell measured on a panel#2 is good, or that performance of a serving cell measured on a beam #1 is good, and performance of a neighboring cell measured on a beam #2 is good. The beam #1 and the beam #2 may correspond to a same antenna panel of the UE or to different antenna panels of the UE.

In this case, in case that the UE wants to stay in the serving cell or switch to a neighboring cell, a throughput is not optimal. The reason for this is that the UE may be in an overlapping position of the coverage of the above-mentioned two cells, and a situation may occur where performance of the serving cell is good for a while and performance of the neighboring cell is good for a while. In view of the above-mentioned situation, an optimal way is that different cells perform a data transmission for the UE based on beams at the same time, and the beams are switched dynamically. In this way, the UE is needed to be able to perform a beam measurement on the neighboring cell. In addition, even if the UE is to be switched to the neighboring cell, in order to achieve a fast handover, the UE is needed to measure beam performance of the neighboring cell in advance, so that a target base station may quickly use a better beam to transmit data to the UE.

In related technologies, when a UE reports a beam measurement result of a serving cell, an identifier (ID) of a reference signal used by the serving cell for a beam measurement, and a corresponding measurement result layer 1-reference signal receiving power (L1-RSRP), and/or a layer 1-signal to interference plus noise ratio (L1-SINR) are directly reported. Since a transmission power of the serving cell is the same, the beam measurement directly feeds back a result measured by the UE. However, when a beam measurement result of a neighboring cell needs to be fed back, in case that a transmission power of the neighboring cell is different from the transmission power of the serving cell, a manner of directly feeding back according to the result measured by the UE may result in that a feedback result cannot directly reflect a path loss between the UE and the neighboring cell. Assuming that the beam is used for an uplink transmission, a selected beam will not be an optimum beam. For example, the transmission power of the neighboring cell is relatively high, so that the beam measurement result of the neighboring cell is better. However, in fact, the path loss between the UE and the neighboring cell is larger than a path loss between the UE and the serving cell. At this time, in case that a beam of the neighboring cell is selected according to the beam measurement result, a situation may occur where beam performance of the neighboring cell is not as good as beam performance of the serving cell. On the contrary, a same problem occurs.

In view of the above-mentioned problems, the present disclosure provides a coordination cell beam measurement method, a coordination cell beam measurement apparatus, and a communication device.

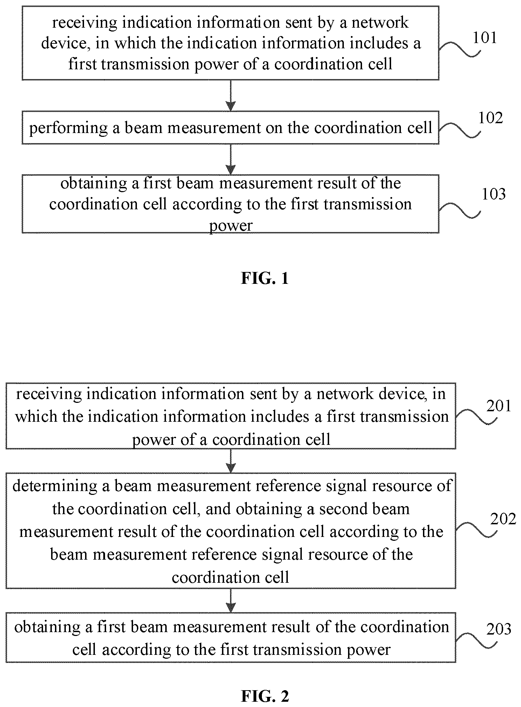

FIG. 1 is a flow chart of a coordination cell beam measurement method provided in an embodiment of the present disclosure. The coordination cell beam measurement method may be performed by a user equipment (UE).

The UE may be a device that provides voice and/or data connectivity to a user, a handheld device with a wireless connection function, or other processing devices connected to a wireless modem, etc. A name of the UE may be different in different systems. A wireless UE may communicate with one or more core networks (CNs) via a radio access network (RAN). The wireless UE may be a mobile terminal device, such as a mobile phone (or referred to as a "cellular" phone) and a computer with a mobile terminal device, such as a portable, pocket-sized, handheld, built-in computer or vehicle-mounted mobile devices, which exchange languages and/or data with the wireless access network.

For example, the UE may be a personal communication service (PCS) phone, a cordless phone, a session initiated protocol (SIP) phone, a wireless local loop (WLL) station, a personal digital assistant (PDA), and other devices. The wireless UE may also be referred to as a system, a subscriber unit, a subscriber station, a mobile station, a mobile, a remote station, an access point, a remote terminal, an access terminal, a user terminal, a user agent, and a user device, not limited in embodiments of the present disclosure.

As shown in FIG. 1, the coordination cell beam measurement method may include steps as follows.

In step 101, indication information sent by a network device is received, in which the indication information includes a first transmission power of a coordination cell.

In the embodiment of the present disclosure, the coordination cell may be referred to as a neighboring cell or a non-serving cell. That is, a cell is different from a physical cell identity (PCI) of a serving cell.

In the embodiment of the present disclosure, the first transmission power of the coordination cell may be a transmission power of a reference signal used for a coordination cell beam measurement.

In the embodiment of the present disclosure, the network device may be a network device where a serving cell is located, or the network device may also be a network device where a coordination cell is located.

The network device takes a base station as an example. A base station may include multiple cells that provide a service for the UE. Depending on different specific applications, each cell may contain multiple transmission reception points (TRPs), and each TRP may contain one or multiple antenna panels. Alternatively, the base station may be a device in an access network that communicates with a wireless terminal device through one or multiple sectors over an air interface, or other names. For example, the base station involved in the embodiment of the present disclosure may be a base transceiver station (BTS) in a global system for mobile communications (GSM) or a code division multiple access (CDMA), a base station (NodeB) in a wide-band code division multiple access (WCDMA), an evolutional Node B (abbreviated as an eNB or an e-NodeB) in a long term evolution (LTE) system, a 5G base station (abbreviated as a gNB) in a 5G network architecture (next generation system), or may be a home evolved Node B (HeNB), a relay node, a home base station (femto), a pico base station (pico), etc., which is not limited in the embodiment of the present disclosure.

In the embodiment of the present disclosure, the network device may send the indication information to the UE. The indication information may include the first transmission power of the coordination cell. Correspondingly, the UE may receive the indication information sent by the network device.

In step 102, a beam measurement is performed on the coordination cell.

It is to be noted that the present disclosure is merely illustrated by performing step 102 after step 101, and the present disclosure is not limited thereto. In a practical application, step 102 may be performed in parallel with step 101, or step 102 may be performed before step 101, which is not limited.

In step 103, a first beam measurement result of the coordination cell is obtained according to the first transmission power.

In the embodiment of the present disclosure, the UE may perform the beam measurement on the coordination cell and acquire the first beam measurement result of the coordination cell according to the first transmission power. Therefore, the UE may perform the beam measurement on the coordination cell and acquire the beam measurement result of the coordination cell, and the UE determines the beam measurement result of the coordination cell in combination with the transmission power of the coordination cell, thus ensuring the accuracy and timeliness of the beam measurement result.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

An embodiment of the present disclosure provides another coordination cell beam measurement method. FIG. 2 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 2, the coordination cell beam measurement method may include steps as follows.

In step 201, indication information sent by a network device is received, in which the indication information includes a first transmission power of a coordination cell.

In the embodiment of the present disclosure, step 201 may be implemented in any one of the embodiments of the present disclosure, respectively, which is not limited in the embodiment of the present disclosure, and will not be elaborated herein.

In the embodiment of the present disclosure, the network device may be a network device where a serving cell is located, and/or a network device where a coordination cell is located.

In a possible implementation of the embodiment of the present disclosure, the first transmission power of the coordination cell may include at least one of a transmission power value of the coordination cell, or a difference between the transmission power of the coordination cell and a transmission power of a serving cell.

Additionally, the transmission power of the coordination cell may include at least one of a transmission power of a synchronization signal block (SSB), in which a physical cell identification (PCI) corresponding to the SSB is a PCI of the coordination cell, or a transmission power of a channel state information reference signal (CSI-RS), in which a reference signal (RS) corresponding to QCL quasi co-location (QCL) type D of the CSI-RS is a SSB, and a PCI corresponding to the SSB is a PCI of the coordination cell.

In step 202, a beam measurement reference signal resource of the coordination cell is determined, and a second beam measurement result of the coordination cell is obtained according to the beam measurement reference signal resource of the coordination cell.

In the embodiment of the present disclosure, the second beam measurement result is a beam measurement result obtained by the UE using the beam measurement reference signal resource of the coordination cell to perform the beam measurement.

In a possible implementation of the embodiment of the present disclosure, the second beam measurement result may include at least one of a L1-RSRP, or a L1-SINR.

In a possible implementation of the embodiment of the present disclosure, the UE may receive reference signal resource configuration information sent by the network device, and determine the beam measurement reference signal resource of the coordination cell according to the reference signal resource configuration information.

In another possible implementation of the embodiment of the present disclosure, the UE may determine the beam measurement reference signal resource of the coordination cell by actively searching for a reference signal.

In the embodiment of the present disclosure, after determining the beam measurement reference signal resource of the coordination cell, the UE may acquire the second beam measurement result of the coordination cell according to the beam measurement reference signal resource of the coordination cell. That is, the UE may perform the beam measurement according to the beam measurement reference signal resource of the coordination cell, and acquire the second beam measurement result of the coordination cell.

It is to be noted that the present disclosure is merely illustrated by performing step 202 after step 201, and the present disclosure is not limited thereto. In a practical application, step 202 may be performed in parallel with step 201, or step 202 may be performed before step 201, which is not limited.

In step 203, a first beam measurement result of the coordination cell is obtained according to the first transmission power.

In a possible implementation of the embodiment of the present disclosure, the UE may obtain the first beam measurement result according to the second beam measurement result and the first transmission power.

As a possible implementation, the UE may subtract the first transmission power from the second beam measurement result to obtain the first beam measurement result.

The L1-RSRP is taken as an example of the second beam measurement result for illustrative description. Assuming that the first transmission power is P1, the first beam measurement result may be (L1-RSRP - P1). The L1-SINR is taken as an example of the second beam measurement result for illustrative description. Assuming that the first transmission power is P1, the first beam measurement result may be (L1-SINR - P1).

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may performs the beam measurement on the coordination cell and acquire the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

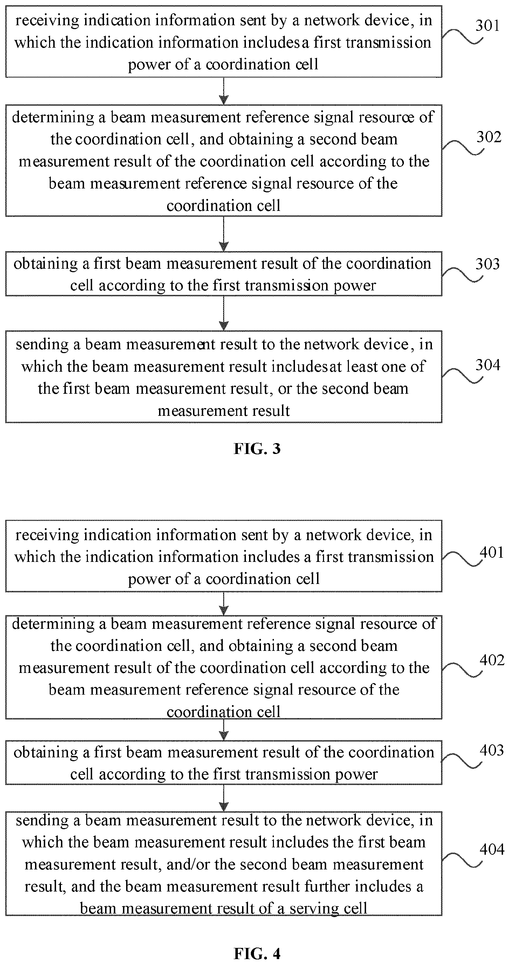

An embodiment of the present disclosure provides another coordination cell beam measurement method. FIG. 3 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 3, the coordination cell beam measurement method may include steps as follows.

In step 301, indication information sent by a network device is received, in which the indication information includes a first transmission power of a coordination cell.

In step 302, a beam measurement reference signal resource of the coordination cell is determined, and a second beam measurement result of the coordination cell is obtained according to the beam measurement reference signal resource of the coordination cell.

In step 303, a first beam measurement result of the coordination cell is obtained according to the first transmission power.

In the embodiment of the present disclosure, steps 301 to 303 may be implemented in any one of the embodiments of the present disclosure, respectively, which is not limited in the embodiment of the present disclosure, and will not be elaborated herein.

In step 304, a beam measurement result is sent to the network device, in which the beam measurement result includes at least one of the first beam measurement result, or the second beam measurement result.

In the embodiment of the present disclosure, the network device may be a network device where a serving cell is located, and/or a network device where a coordination cell is located.

It is to be noted that the network device in step 304 may be the same as or different from the network device in step 301, which is not limited in the present disclosure. For example, the network device in step 301 may be the network device where the serving cell is located, and the network device in step 304 may be the network device where the serving cell is located and/or the network device where the coordination cell is located.

In a possible implementation of the embodiment of the present disclosure, since the network device knows the first transmission power of the coordination cell, the beam measurement result sent by the UE to the network device may merely be the second beam measurement result. The network device may determine the first beam measurement result by itself according to the second beam measurement result and the first transmission power after receiving the second beam measurement result.

In another possible implementation of the embodiment of the present disclosure, the first beam measurement result may be sent to the network device by the UE without the network device determining the first beam measurement result according to the first transmission power. That is, the beam measurement result sent by the UE to the network device may be the first beam measurement result.

In yet another possible implementation of the embodiment of the present disclosure, the beam measurement result sent by the UE to the network device may include the first beam measurement result and the second beam measurement result at the same time.

Additionally, a manner for reporting the beam measurement result includes at least one of periodic reporting, non-periodic reporting, or semi-persistent reporting.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and acquire the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

An embodiment of the present disclosure provides another coordination cell beam measurement method. FIG. 4 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 4, the coordination cell beam measurement method may include steps as follows.

In step 401, indication information sent by a network device is received, in which the indication information includes a first transmission power of a coordination cell.

In step 402, a beam measurement reference signal resource of the coordination cell is determined, and a second beam measurement result of the coordination cell is obtained according to the beam measurement reference signal resource of the coordination cell.

In step 403, a first beam measurement result of the coordination cell is obtained according to the first transmission power.

In step 404, a beam measurement result is sent to the network device, in which the beam measurement result includes the first beam measurement result, and/or the second beam measurement result, and the beam measurement result further includes a beam measurement result of a serving cell.

In the embodiment of the present disclosure, steps 401 to 404 may be implemented in any one of the embodiments of the present disclosure, respectively, which is not limited in the embodiment of the present disclosure, and will not be elaborated herein.

In the embodiment of the present disclosure, the beam measurement result may include the beam measurement result of the serving cell in addition to the first beam measurement result and/or the second beam measurement result of the coordination cell. That is, the UE may perform the beam measurement on the serving cell, obtain the beam measurement result of the serving cell, and send the beam measurement result of the serving cell to the network device.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and acquire the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

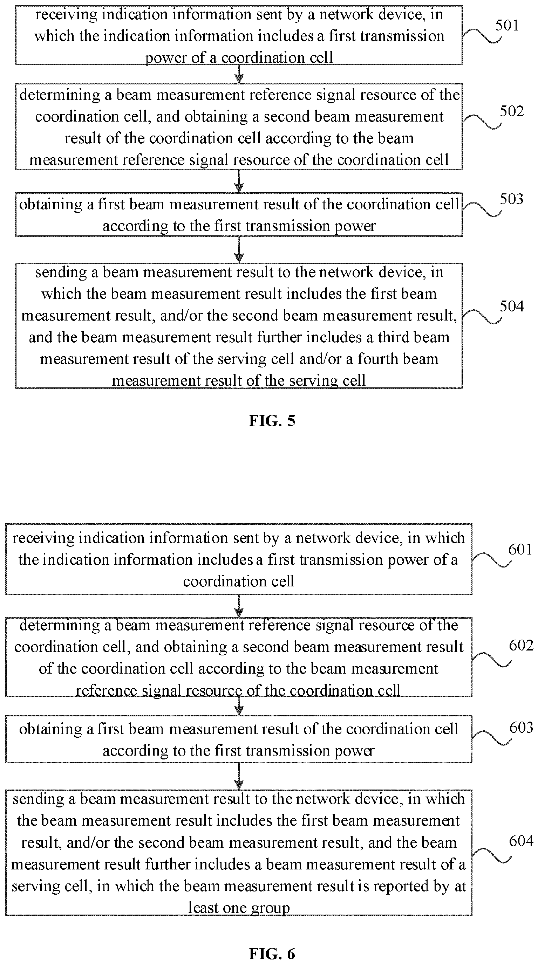

An embodiment of the present disclosure provides another coordination cell beam measurement method. FIG. 5 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 5, the coordination cell beam measurement method may include steps as follows.

In step 501, indication information sent by a network device is received, in which the indication information includes a first transmission power of a coordination cell.

In step 502, a beam measurement reference signal resource of the coordination cell is determined, and a second beam measurement result of the coordination cell is obtained according to the beam measurement reference signal resource of the coordination cell.

In step 503, a first beam measurement result of the coordination cell is obtained according to the first transmission power.

In step 504, a beam measurement result is sent to the network device, in which the beam measurement result includes the first beam measurement result, and/or the second beam measurement result, and the beam measurement result further includes a third beam measurement result of the serving cell and/or a fourth beam measurement result of the serving cell.

In the embodiment of the present disclosure, steps 501 to 504 may be implemented in any one of the embodiments of the present disclosure, respectively, which is not limited in the embodiment of the present disclosure, and will not be elaborated herein.

In the embodiment of the present disclosure, the UE performs the beam measurement on the serving cell, and an obtained beam measurement result of the serving cell may include the third beam measurement result of the serving cell and/or the fourth beam measurement result of the serving cell.

In a possible implementation of the embodiment of the present disclosure, the third beam measurement result may be a beam measurement result obtained by the UE performing the beam measurement according to the beam measurement reference signal resource of the serving cell. That is, the UE may determine the beam measurement reference signal resource of the serving cell, perform the beam measurement according to the beam measurement reference signal resource of the serving cell, and obtain the third beam measurement result of the serving cell.

The third beam measurement result may include at least one of a L 1-RSRP, or a L 1-SINR.

As an example, the UE may receive reference signal resource configuration information sent by the network device, and determine the beam measurement reference signal resource of the serving cell according to the reference signal resource configuration information, so that the beam measurement may be performed according to the beam measurement reference signal resource of the serving cell, and the third beam measurement result of the serving cell may be obtained.

As another example, the UE may determine the beam measurement reference signal resource of the serving cell by actively searching for a reference signal, so that the beam measurement may be performed according to the beam measurement reference signal resource of the serving cell, and the third beam measurement result of the serving cell may be obtained.

In a possible implementation of the embodiment of the present disclosure, the fourth beam measurement result may be obtained according to the third beam measurement result and the transmission power of the serving cell.

As a possible implementation, the UE may receive transmission power information of the serving cell. For example, the UE may receive the transmission power information of the serving cell sent by the network device, and obtain the fourth beam measurement result of the serving cell according to the third beam measurement result of the serving cell and the transmission power information of the serving cell.

As an example, the UE may determine the transmission power of the serving cell according to received transmission power information of the serving cell, and subtract the transmission power of the serving cell from the third beam measurement result to obtain the fourth beam measurement result.

The L1-RSRP is taken as an example of the third beam measurement result for illustrative description. Assuming that the transmission power of the serving cell is P2, the fourth beam measurement result may be (L1-RSRP - P2). The L1-SINR is taken as an example of the third beam measurement result for illustrative description. Assuming that the transmission power of the serving cell is P2, the fourth beam measurement result may be (L1-SINR - P2).

Additionally, a manner for reporting the beam measurement result may include at least one of periodic reporting, non-periodic reporting, or semi-persistent reporting.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and acquire the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

An embodiment of the present disclosure provides another coordination cell beam measurement method. FIG. 6 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 6, the coordination cell beam measurement method may include steps as follows.

In step 601, indication information sent by a network device is received, in which the indication information includes a first transmission power of a coordination cell.

In step 602, a beam measurement reference signal resource of the coordination cell is determined, and a second beam measurement result of the coordination cell is obtained according to the beam measurement reference signal resource of the coordination cell.

In step 603, a first beam measurement result of the coordination cell is obtained according to the first transmission power.

In step 604, a beam measurement result is sent to the network device, in which the beam measurement result includes the first beam measurement result, and/or the second beam measurement result, and the beam measurement result further includes a beam measurement result of a serving cell, in which the beam measurement result is reported by at least one group.

The beam measurement result of the serving cell may include the third beam measurement result of the serving cell and/or the fourth beam measurement result of the serving cell.

In the embodiment of the present disclosure, steps 601 to 604 may be implemented in any one of the embodiments of the present disclosure, respectively, which is not limited in the embodiment of the present disclosure, and will not be elaborated herein.

In a possible implementation of the embodiment of the present disclosure, each group in the at least one group corresponds to at least one of the following items.

A first item is a beam group identifier (ID). That is, a beam of each group has a corresponding ID, which is denoted as the beam group ID in the present disclosure.

A second item is a physical cell identifier (PCI). That is, beams of different groups are beams of different cells.

A third item is a control resource set pool index (CORESETPoolIndex). That is, beams of different groups have different CORESETPoolIndexes. Alternatively, the different CORESETPoolIndexes may correspond to different PCIs.

A fourth item is a reference signal resource set ID, a fifth item is a reference signal resource ID, and a sixth item is transmission reception point (TRP) ID, in which the above-mentioned TRP may be a TRP of the network device. A seventh item is an antenna panel ID.

The above-mentioned panel may be a panel of a network device, or the above-mentioned panel may also be a panel of a UE, which is not limited in the present disclosure.

In a possible implementation of the embodiment of the present disclosure, beams in the group are beams which can be received by the UE simultaneously, or beams between different groups are the beams which can be received by the UE simultaneously.

In the embodiment of the present disclosure, the UE may report the beam measurement result to the network device by the at least one group.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

In any one of embodiments of the present disclosure, the UE may receive the indication information, and the indication information contains the transmission power configured to indicate the coordination cell (or it may be referred to as a non-serving cell or a neighboring cell), which is denoted as the first transmission power in the present disclosure.

In an embodiment of the present disclosure, the UE may obtain beam measurement information of the coordination cell (such as the beam measurement reference signal resource of the coordination cell), perform the beam measurement according to the beam measurement information, obtain the beam measurement result of the coordination cell, and report the beam measurement result of the coordination cell to the network device.

In a possible situation, a manner for reporting the beam measurement result includes periodic reporting, non-periodic reporting, or semi-persistent reporting.

In a possible situation, the beam measurement result of the coordination cell may be reported together with the beam measurement result of the serving cell, or the beam measurement result of the coordination cell may be reported independently.

In a possible situation, the beam measurement result is reported based on a group.

In a first way, the beam measurement result is reported by the at least one group. For example, the beam measurement result of the coordination cell is one group, and the beam measurement result of the serving cell is one group. Each group corresponds to a group ID, and the group ID may be a physical cell identifier (PCI), a CORESETPoolIndex, or a reference signal resource set ID corresponding to beam measurements of different cells.

In a second way, the beam measurement result is reported by the at least one group. For example, a beam received by a panel#1 of the UE is one group, and a beam received by another panel#2 of the UE is another group. That is, beams between different groups are beams which can be received by the UE simultaneously. Each group corresponds to a panel ID, or each group corresponds to a reference signal resource ID or a reference signal resource set ID that has a correspondence to the panel.

Ina third way, the beam measurement result is reported by the at least one group, and beams in the group are beams which can be received by the UE simultaneously. The beams received by the UE simultaneously may be beams received by the UE using one or multiple spatial filters.

In a possible situation, the beam measurement result may also be reported in a non-group manner.

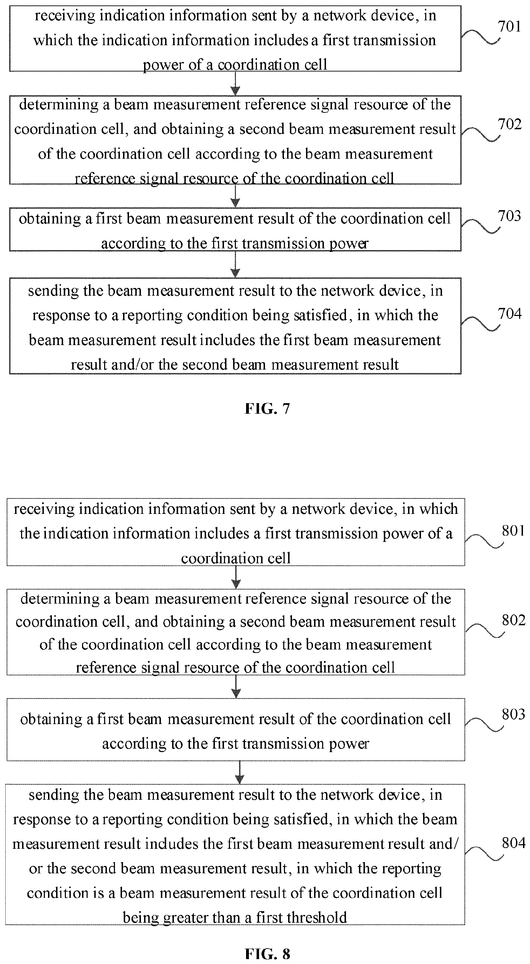

An embodiment of the present disclosure provides another coordination cell beam measurement method. FIG. 7 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 7, the coordination cell beam measurement method may include steps as follows.

In step 701, indication information sent by a network device is received, in which the indication information includes a first transmission power of a coordination cell.

In step 702, a beam measurement reference signal resource of the coordination cell is determined, and a second beam measurement result of the coordination cell is obtained according to the beam measurement reference signal resource of the coordination cell.

In step 703, a first beam measurement result of the coordination cell is obtained according to the first transmission power.

In step 704, the beam measurement result is sent to the network device, in response to a reporting condition being satisfied, in which the beam measurement result includes the first beam measurement result and/or the second beam measurement result.

In the embodiment of the present disclosure, steps 701 to 704 may be implemented in any one of the embodiments of the present disclosure, respectively, which is not limited in the embodiment of the present disclosure, and will not be elaborated herein.

In the embodiment of the present disclosure, after obtaining the beam measurement result of the coordination cell, the UE may determine whether the beam measurement result of the coordination cell satisfy the reporting condition, and merely in case that the reporting condition is satisfied, the UE reports the beam measurement result of the coordination cell to the network device. However, in case that the reporting condition is not satisfied, the UE may not need to report the beam measurement result of the coordination cell to the network device.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

An embodiment of the present disclosure provides another coordination cell beam measurement method. FIG. 8 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 8, the coordination cell beam measurement method may include steps as follows.

In step 801, indication information sent by a network device is received, in which the indication information includes a first transmission power of a coordination cell.

In step 802, a beam measurement reference signal resource of the coordination cell is determined, and a second beam measurement result of the coordination cell is obtained according to the beam measurement reference signal resource of the coordination cell.

In step 803, a first beam measurement result of the coordination cell is obtained according to the first transmission power.

In step 804, the beam measurement result is sent to the network device, in response to a reporting condition being satisfied, in which the beam measurement result includes the first beam measurement result and/or the second beam measurement result, in which the reporting condition is a beam measurement result of the coordination cell being greater than a first threshold.

In the embodiment of the present disclosure, steps 801 to 804 may be implemented in any one of the embodiments of the present disclosure, respectively, which is not limited in the embodiment of the present disclosure, and will not be elaborated herein.

In the embodiment of the present disclosure, the first threshold may be configured by the network device or specified in a protocol, which is not limited in the present disclosure.

In the embodiment of the present disclosure, after obtaining the beam measurement result of the coordination cell, the UE may determine whether the beam measurement result of the coordination cell is greater than the first threshold. In case that the beam measurement result of the coordination cell is greater than the first threshold, it is determined that the reporting condition is satisfied, and the UE may report the beam measurement result of the coordination cell to the network device. However, in case that the beam measurement result of the coordination cell is not greater than the first threshold, it is determined that the reporting condition is not satisfied, and the UE may not need to report the beam measurement result of the coordination cell to the network device. The beam measurement result of the coordination cell obtained by the UE may include the first beam measurement result and/or the second beam measurement result.

As an example, the UE may use the first beam measurement result of the coordination cell to determine whether the reporting condition is satisfied, that is, the UE may determine whether the first beam measurement result of the coordination cell is greater than the first threshold. In case that the first beam measurement result of the coordination cell is greater than the first threshold, it is determined that the reporting condition is satisfied, and the UE may report the first beam measurement result and/or the second beam measurement result of the coordination cell to the network device.

As another example, the UE may use the second beam measurement result of the coordination cell to determine whether the reporting condition is satisfied, that is, the UE may determine whether the second beam measurement result of the coordination cell is greater than the first threshold. In case that the second beam measurement result of the coordination cell is greater than the first threshold, it is determined that the reporting condition is satisfied, and the UE may report the first beam measurement result and/or the second beam measurement result of the coordination cell to the network device.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

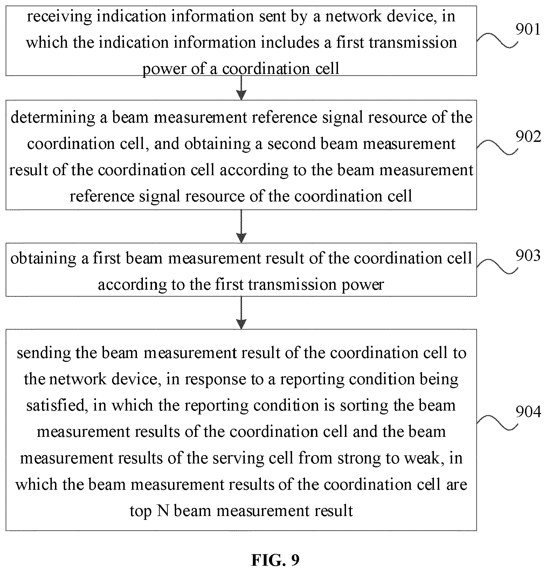

An embodiment of the present disclosure provides another coordination cell beam measurement method. FIG. 9 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 9, the coordination cell beam measurement method may include steps as follows.

In step 901, indication information sent by a network device is received, in which the indication information includes a first transmission power of a coordination cell.

In step 902, a beam measurement reference signal resource of the coordination cell is determined, and a second beam measurement result of the coordination cell is obtained according to the beam measurement reference signal resource of the coordination cell.

In step 903, a first beam measurement result of the coordination cell is obtained according to the first transmission power.

In step 904, the beam measurement result of the coordination cell is sent to the network device, in response to a reporting condition being satisfied, in which the reporting condition is sorting the beam measurement results of the coordination cell and the beam measurement results of the serving cell from strong to weak, in which the beam measurement results of the coordination cell are top N beam measurement results.

N is a positive integer. Alternatively, N may be the maximum number of beams that may be reported by the UE in one beam report.

The beam measurement results of the coordination cell may include the first beam measurement result and/or the second beam measurement result.

The beam measurement results of the serving cell may include the third beam measurement result and/or the fourth beam measurement result.

In the embodiment of the present disclosure, steps 901 to 904 may be implemented in any one of the embodiments of the present disclosure, respectively, which is not limited in the embodiment of the present disclosure, and will not be elaborated herein.

In the embodiment of the present disclosure, after obtaining the beam measurement result of the coordination cell, the UE may sort the beam measurement results of the coordination cell and the beam measurement results of the serving cell from strong to weak to obtain a sorting result, and determine whether the beam measurement of the coordination cell is the top N beam measurement results in the sorting result. In case that the beam measurement results of the coordination cell are the top N beam measurement results in the sorting result, the UE may determine that the reporting condition is satisfied, and may send the beam measurement results of the coordination cell to the network device. However, in the case that the beam measurement results of the coordination cell are not the top N beam measurement results in the sorting result, the UE may determine that the reporting condition is not satisfied, and may not need to report the beam measurement results of the coordination cell to the network device.

As an example, the UE may use the first beam measurement result of the coordination cell to determine whether the reporting condition is satisfied. That is, the UE may sort the first beam measurement results of the coordination cell and the beam measurement results of the serving cell from strong to weak to obtain a sorting result, and determine whether the first beam measurement result of the coordination cell is top N beam measurement results in the sorting result. In case that the first beam measurement result of the coordination cell is the top N beam measurement results in the sorting result, it is determined that the reporting condition is satisfied, and the UE may report the first beam measurement result and/or the second beam measurement result of the coordination cell to the network device. The beam measurement result of the serving cell may include the third beam measurement result and/or the fourth beam measurement result.

As another example, the UE may use the second beam measurement result of the coordination cell to determine whether the reporting condition is satisfied. That is, the UE may sort the second beam measurement results of the coordination cell and the beam measurement results of the serving cell from strong to weak to obtain a sorting result, and determine whether the second beam measurement result of the coordination cell is top N beam measurement results in the sorting result. In case that the second beam measurement result of the coordination cell is the top N beam measurement results in the sorting result, it is determined that the reporting condition is satisfied, and the UE may report the first beam measurement result and/or the second beam measurement result of the coordination cell to the network device. The beam measurement results of the serving cell may include the third beam measurement result and/or the fourth beam measurement result.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

It is to be noted that in any one of the embodiments of the present disclosure, the beam measurement result may include at least one of the following items.

A first item is a layer 1-reference signal receiving power (L1-RSRP). The L1-RSRP may be a L1-RSRP of the coordination cell and/or the serving cell, that is, the L1-RSR may be the second beam measurement result and/or the third beam measurement result in the above-mentioned embodiments.

A second item is a layer 1-signal to interference plus noise ratio (L1-SINR). The L1-SINR may be a L1-SINR of the coordination cell and/or the serving cell, that is, the L1-SINR may be the second beam measurement result and/or the third beam measurement result in the above-mentioned embodiments.

A third item is a correction value of a L1-RSRP based on the first transmission power of the coordination cell. For example, the correction value may be a value obtained by subtracting the first transmission power from the L1-RSRP of the coordination cell, that is, the correction value may be the first beam measurement result.

A fourth item is a correction value of a L1-SINR based on the first transmission power of the coordination cell. For example, the correction value may be a value obtained by subtracting the first transmission power from the L1-SINR of the coordination cell, that is, the correction value may be the first beam measurement result.

A fifth item is a correction value of a L1-RSRP based on the transmission power of the serving cell. For example, the correction value may be a value obtained by subtracting the transmission power of the serving cell from the L1-RSRP of the serving cell, that is, the correction value may be the fourth beam measurement result.

A sixth item is a correction value of a L1-SINR based on the transmission power of the serving cell. For example, the correction value may be a value obtained by subtracting the transmission power of the serving cell from the L1-SINR of the serving cell, that is, the correction value may be the fourth beam measurement result.

A seventh item is a correction value of a L1-RSRP based on an uplink transmission power of the UE. For example, the correction value may be a value obtained by subtracting the uplink transmission power of the antenna panel of the UE from the L1-RSRP of the coordination cell, that is, the correction value may be a value obtained by subtracting the uplink transmission power of the antenna panel of the UE from the second beam measurement result. For another example, the correction value may be a value obtained by subtracting the uplink transmission power of the antenna panel of the UE from the L1-RSRP of the serving cell, that is, the correction value may be a value obtained by subtracting the uplink transmission power of the antenna panel of the UE from the third beam measurement result.

It is to be noted that, considering being affected by a maximum permissible exposure (MPE) corresponding to the UE. That is, the UE has a large radiation to the human body, the first transmission power may also be related to the MPE. For example, the first transmission power may be the uplink transmission power of the antenna panel of the UE, and the correction value of the seventh item may be the first beam measurement result and/or the fourth beam measurement result at the same time.

An eighth item is a correction value of a L1-SINR based on an uplink transmission power of the UE. For example, the correction value may be a value obtained by subtracting the uplink transmission power of the antenna panel of the UE from the L1-SINR of the coordination cell, that is, the correction value may be a value obtained by subtracting the uplink transmission power of the antenna panel of the UE from the second beam measurement result. For another example, the correction value may be a value obtained by subtracting the uplink transmission power of the antenna panel of the UE from the L1-SINR of the serving cell, that is, the correction value may be a value obtained by subtracting the uplink transmission power of the antenna panel of the UE from the third beam measurement result.

Similarly, when the first transmission power is the uplink transmission power of the antenna panel of the UE, the correction value of the eighth item may be the first beam measurement result and/or the fourth beam measurement result.

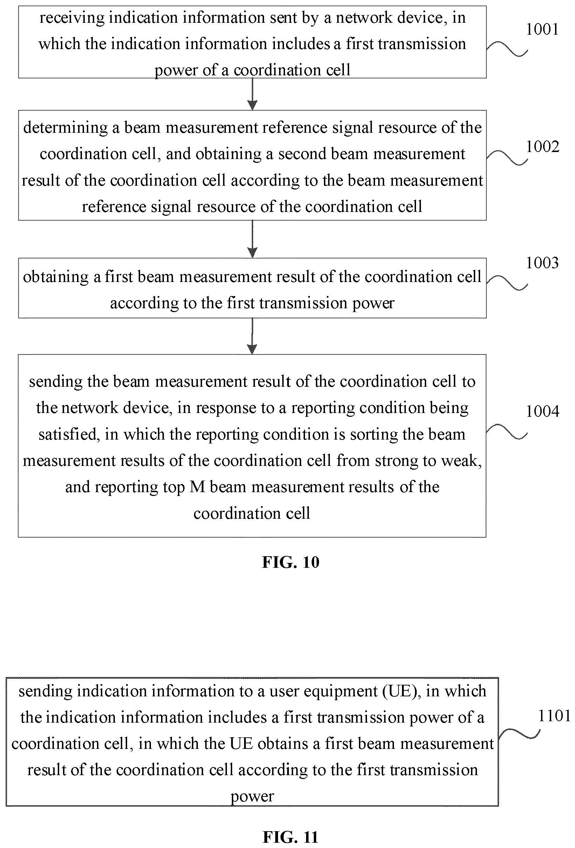

An embodiment of the present disclosure provides another coordination cell beam measurement method. FIG. 10 is a flow chart of another coordination cell beam measurement method provided in an embodiment of the present disclosure. The coordination cell beam measurement method may be performed by a UE. The coordination cell beam measurement method may be performed alone, may be performed together with any one of the embodiments or possible implementations of the embodiments in the present disclosure, or may be performed together with any technical solution in related technologies.

As shown in FIG. 10, the coordination cell beam measurement method may include steps as follows.

In step 1001, indication information sent by a network device is received, in which the indication information includes a first transmission power of a coordination cell.

In step 1002, a beam measurement reference signal resource of the coordination cell is determined, and a second beam measurement result of the coordination cell is obtained according to the beam measurement reference signal resource of the coordination cell.

In step 1003, a first beam measurement result of the coordination cell is obtained according to the first transmission power.

In step 1004, the beam measurement result of the coordination cell is sent to the network device, in response to a reporting condition being satisfied, in which the reporting condition is sorting the beam measurement results of the coordination cell from strong to weak, and reporting top M beam measurement results of the coordination cell.

M is a positive integer. Alternatively, M may be a positive integer less than or equal to N, and N may be the maximum number of beams that may be reported by the UE in one beam report.

The beam measurement result of the coordination cell includes the first beam measurement result and/or the second beam measurement result.

In the embodiment of the present disclosure, steps 1001 to 1004 may be implemented in any one of the embodiments of the present disclosure, respectively, which is not limited in the embodiment of the present disclosure, and will not be elaborated herein.

In the embodiment of the present disclosure, after obtaining the beam measurement results of the coordination cell, the UE may sort the beam measurement results of the coordination cell from strong to weak, and send the top M beam measurement results of the coordination cell in a sorting result to the network device.

As an example, the UE may sort the first beam measurement results of the coordination cell from strong to weak to obtain a sorting result, filter a coordination cell corresponding to top M first beam measurement results from the sorting result, and report a first beam measurement result and/or a second beam measurement result of the coordination cell obtained by filtering to the network device.

As another example, the UE may sort the second beam measurement results of the coordination cell from strong to weak to obtain a sorting result, and filter a coordination cell corresponding to top M second beam measurement result from the sorting result, and report a first beam measurement result and/or a second beam measurement result of the coordination cell obtained by filtering to the network device.

In the coordination cell beam measurement method provided in the embodiment of the present disclosure, the UE receives the indication information sent by the network device, in which the indication information includes the first transmission power of the coordination cell, and performs the beam measurement on the coordination cell, and obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

In any one of the embodiments of the present disclosure, the UE may determine to report which beam measurement results of the coordination cell, or determine whether beam measurement results of a certain coordination cell satisfy the reporting condition according to at least one of the following.

The beam measurement result of the coordination cell may include a L1-RSRP and/or a L1-SINR, that is, the second beam measurement result.

The beam measurement result of the coordination cell may further include a first beam measurement result determined according to the second beam measurement result and the first transmission power of the coordination cell, in which the first transmission power of the coordination cell is a transmission power of a reference signal used for a coordination cell beam measurement.

The first transmission power may be a transmission power value of the coordination cell.

As a possible implementation, the transmission power value of the coordination cell may be a transmission power of a SSB, and a PCI corresponding to the SSB is a PCI of the coordination cell.

As an example, the reporting condition of the beam measurement result of the coordination cell may be that the beam measurement result of the coordination cell is greater than the first threshold. The UE may compare the beam measurement result of the coordination cell with the threshold. For example, in case that the first transmission power of the coordination cell is P1, and a power of the serving cell is P2, the UE may compare a value (i.e., the first beam measurement result) obtained by subtracting P1 from the beam measurement result of the coordination cell with the threshold. In case that the first beam measurement result is greater than the threshold, it is determined that the reporting condition is satisfied, and the first beam measurement result corresponding to the coordination cell may be reported.

Similarly, a value (i.e., the fourth beam measurement result) obtained by subtracting P2 from the beam measurement result of the serving cell (i.e., the third beam measurement result) may be compared with the threshold.

As another example, the reporting condition of the beam measurement result of the coordination cell may be that the beam measurement results of the coordination cell are top N beam measurement results in a sorting result obtained by sorting all the beam measurement results from large to small. The UE may sort beam measurement results of all cells, such as the fourth beam measurement result of the serving cell and the first beam measurement result of the coordination cell, from strong to weak, and report the top N beam measurement results of the coordination cell to the network device.

As another possible implementation, the transmission power value of the coordination cell may also be a transmission power of a CSI-RS. Further, a RS corresponding to the QCL Type D of the CSI-RS is a SSB, and a PCI corresponding to the SSB is a PCI of the coordination cell.

In case that the transmission power of the CSI-RS is different from a transmission power of the SSB, the above-mentioned two examples may be used to determine whether the beam measurement results of the coordination cell satisfy the reporting condition. That is, the transmission power of the SSB in the above-mentioned two examples may be replaced by the transmission power of the CSI-RS. In case that the transmission power of the CSI-RS is the same as the transmission power of the SSB, a manner of determining whether the beam measurement results of the coordination cell satisfy the reporting condition is the same as the above-mentioned two examples.

The first transmission power may also be a difference between the transmission power of the coordination cell and a transmission power of a serving cell.

As an example, the reporting condition of the beam measurement result of the coordination cell may be that the beam measurement result of the coordination cell is greater than the threshold. The UE may determine the beam measurement result of the coordination cell (for example, it may be the first beam measurement result, or may also be the second beam measurement result) according to the above-mentioned example. In case that the transmission power of the coordination cell is higher than the transmission power of the serving cell by one offset, it may subtract the one offset from the beam measurement result of the coordination cell and then compare it with the threshold. In case that the beam measurement result after subtracting the one offset is greater than the threshold, it is determined that the reporting condition is satisfied, and the beam measurement result corresponding to the coordination cell may be reported.

As another example, the reporting condition of the beam measurement results of the coordination cell may be that the beam measurement results of the coordination cell are top N beam measurement results in a sorting result obtained by sorting all the beam measurement results from large to small. Assuming that the transmission power of the coordination cell is higher than the transmission power of the serving cell by an offset, the UE may subtract the offset from the beam measurement result of the coordination cell (for example, it may be the first beam measurement result, or may also be the second beam measurement result), and sort the beam measurement result after subtracting the offset and the beam measurement result of the serving cell from strong to weak, so that the top N beam measurement results of the coordination cells may be reported to the network device.

In any one of the embodiments of the present disclosure, considering being affected by a MPE corresponding to the UE. That is, since the UE has a large radiation to the human body, the transmission power of the UE is to be reduced.

As an example, the reporting condition of the beam measurement result of the coordination cell may be that the beam measurement result of the coordination cell is higher than the threshold. For example, in case that the transmission power of the UE corresponding to the beam of the coordination cell needs to be reduced by one offset, the UE may subtract the one offset from the beam measurement result of the coordination cell (for example, the first beam measurement result, or may also be the second beam measurement result) and then compare it with the threshold. In case that the beam measurement result after subtracting the one offset is greater than the threshold, it is determined that the reporting condition is satisfied, and the beam measurement result corresponding to the coordination cell may be reported.

As another example, the reporting condition of the beam measurement results of the coordination cell may be that the beam measurement results of the coordination cell are top N beam measurement results in a sorting result obtained by sorting all the beam measurement results from large to small. For example, in case that the transmission power of the UE corresponding to the beam of the coordination cell needs to be reduced by one offset, the UE may subtract the one offset from the beam measurement result of the coordination cell (for example, it may be the first beam measurement result, or may also be the second beam measurement result), and sort the beam measurement result after subtracting the one offset and the beam measurement result of the serving cell from strong to weak, so that the top N beam measurement results of the coordination cell may be reported to the network device.

In any one of the embodiments of the present disclosure, the beam measurement result of the coordination cell reported by the UE may include at least one of: a L 1-RSRP and/or a L 1-SINR of the coordination cell obtained by a direct measurement, or a result of adding a correction value to a L1-RSRP and/or a L1-SINR obtained by a direct measurement. The correction value is determined according to at least one of: the transmission power of the coordination cell, for example, the beam measurement result of the coordination cell being fed back: the L 1-RSRP minus the transmission power of the coordination cell (i.e. the first beam measurement result being fed back), and/or the beam measurement result of the serving cell being fed back: the L1-RSRP minus the transmission power of the serving cell (i.e. the fourth beam measurement result being fed back), the difference between the transmission power of the coordination cell and the transmission power of the serving cell, for example, the beam measurement result of the coordination cell being fed back: the L1-RSRP minus a transmission power difference between the coordination cell and the serving cell, or the influence of different panels after the MPE, considering being affected by a power management maximum power reduction (P-MPR) of different panels, a virtual power headroom (PHR), for example, the beam measurement result of the coordination cell being fed back: the L1-RSRP minus the transmission power value that the UE needs to reduce.

In the present disclosure, when reporting the beam measurement results of the coordination cell, the UE determines whether to report the beam measurement results of the coordination cell and which the beam measurement results of the coordination cell are reported in combination with the transmission power of the coordination cell, thus ensuring the accuracy and timeliness of the beam measurement results of the coordination cell and improving the performance of the UE.

An embodiment of the present disclosure provides a coordination cell beam measurement method. FIG. 11 is a flow chart of another coordination cell beam measurement method provided in an embodiment of the present disclosure. The coordination cell beam measurement method may be performed by a network device. The coordination cell beam measurement method may be performed alone, may be performed together with any one of the embodiments or possible implementations of the embodiments in the present disclosure, or may be performed together with any technical solution in related technologies.

As shown in FIG. 11, the coordination cell beam measurement method may include a step as follows.

In step 1101, indication information is sent to a user equipment (UE), in which the indication information includes a first transmission power of a coordination cell, in which the UE obtains a first beam measurement result of the coordination cell according to the first transmission power.

It is to be noted that explanations of the method performed by the UE in any of the above-mentioned embodiments in FIG. 1 to FIG. 10 are also applicable to the method performed by the network device in the embodiment. Implementation principles are similar, which will not be elaborated herein.

In the coordination cell beam measurement method provided in the embodiment of the present disclosure, the network device sent the indication information to the UE, and the indication information includes the first transmission power of the coordination cell, and the UE obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

It is to be noted that the above-mentioned possible implementations may be implemented alone or in combination, which is not limit in the embodiment of the present disclosure.

Corresponding to the coordination cell beam measurement method provided in the above-mentioned embodiments of FIGS. 1 to 10, the present disclosure also provides a coordination cell beam measurement apparatus. Since the coordination cell beam measurement apparatus provided in an embodiment of the present disclosure corresponds to the coordination cell beam measurement method provided in the above-mentioned embodiments of FIGS. 1 to 10, the implementation of the coordination cell beam measurement method is also applicable to the coordination cell beam measurement apparatus provided in an embodiment of the present disclosure, which will not be described in the embodiment of the present disclosure.

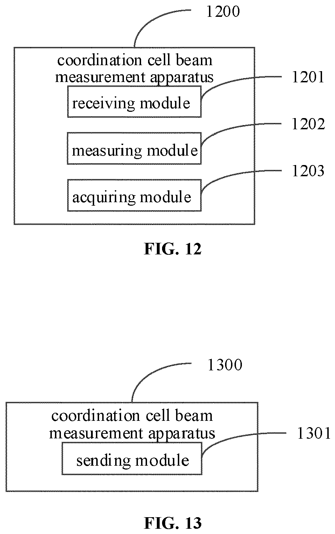

FIG. 12 is a schematic diagram of a coordination cell beam measurement apparatus provided in an embodiment of the present disclosure. The apparatus may be applied to a user equipment (UE).

As shown in FIG. 12, the coordination cell beam measurement apparatus 1200 may include a receiving module 1201, a measuring module 1202, and an acquiring module 1203.

The receiving module 1201 is configured to receive indication information sent by a network device, in which the indication information includes a first transmission power of a coordination cell. The measuring module 1202 is configured to perform a beam measurement on the coordination cell. The acquiring module 1203 is configured to acquire a first beam measurement result of the coordination cell according to the first transmission power.

Additionally, the coordination cell beam measurement apparatus 1200 may further include a determining module configured to determine a beam measurement reference signal resource of the coordination cell, and the acquiring module 1203 further configured to obtain a second beam measurement result of the coordination cell according to the beam measurement reference signal resource of the coordination cell.

Additionally, the first beam measurement result is obtained according to the second beam measurement result and the first transmission power.

Additionally, the coordination cell beam measurement apparatus 1200 may further include a sending module configured to send a beam measurement result to the network device, in which the beam measurement result includes at least one of the first beam measurement result, or the second beam measurement result.

Additionally, the beam measurement result further includes a beam measurement result of a serving cell.

Additionally, the beam measurement result of the serving cell includes a third beam measurement result of the serving cell and/or a fourth beam measurement result of the serving cell.

Additionally, the determining module is further configured to determine a beam measurement reference signal resource of the serving cell. The acquiring module 1203 is further configured to perform a beam measurement according to the beam measurement reference signal resource of the serving cell to obtain the third beam measurement result of the serving cell.

Additionally, the receiving module 1201 is further configured to receive transmission power information of the serving cell. The acquiring module 1203 is further configured to obtain the fourth beam measurement result of the serving cell according to the third beam measurement result of the serving cell and the transmission power information of the serving cell.

Additionally, a manner for reporting the beam measurement result includes at least one of periodic reporting, non-periodic reporting, or semi-persistent reporting.

Additionally, the beam measurement result is reported by at least one group.

Additionally, each group in the at least one group corresponds to at least one of a beam group identifier (ID), a physical cell identifier (PCI), a control resource set pool index (CORESETPoolIndex), a reference signal resource set ID, a reference signal resource ID, a transmission reception point (TRP) ID, or an antenna panel ID.

Additionally, beams in the group are beams which can be received by the UE simultaneously, or beams between different groups are beams which can be received by the UE simultaneously.

Additionally, the sending module is specifically configured to send the beam measurement result to the network device, in response to a reporting condition being satisfied.

Additionally, the beam measurement result includes at least one of a layer 1-reference signal receiving power (L1-RSRP), a layer 1-signal to interference plus noise ratio (L1-SINR), a correction value of a L1-RSRP based on the first transmission power of the coordination cell, a correction value of a L1-SINR based on the first transmission power of the coordination cell, a correction value of a L1-RSRP based on an uplink transmission power of the UE, or a correction value of a L1-SINR based on an uplink transmission power of the UE.

Additionally, the first transmission power of the coordination cell includes at least one of a transmission power value of the coordination cell, or a difference between the transmission power of the coordination cell and a transmission power of a serving cell.

Additionally, the reporting condition is a beam measurement result of the coordination cell being greater than a first threshold.

Additionally, the reporting condition is sorting the beam measurement results of the coordination cell and the beam measurement results of the serving cell from strong to weak, in which the beam measurement results of the coordination cell are top N beam measurement results, where N is a positive integer.

Additionally, the reporting condition is sorting the beam measurement results of the coordination cell from strong to weak, and reporting top M beam measurement results of the coordination cell, where M is a positive integer.

The coordination cell beam measurement apparatus provided in the embodiment of the present disclosure, the UE receives the indication information sent by the network device, in which the indication information includes the first transmission power of the coordination cell, performs the beam measurement on the coordination cell, and obtains the first beam measurement result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

Corresponding to the coordination cell beam measurement method provided in the above-mentioned embodiments of FIG. 11, the present disclosure also provides a coordination cell beam measurement apparatus. Since the coordination cell beam measurement apparatus provided in an embodiment of the present disclosure corresponds to the coordination cell beam measurement method provided in the above-mentioned embodiments of FIG. 11, the implementation of the coordination cell beam measurement method is also applicable to the coordination cell beam measurement apparatus provided in an embodiment of the present disclosure, which will not be described in the embodiment of the present disclosure.

FIG. 13 is a schematic diagram of another coordination cell beam measurement apparatus provided in an embodiment of the present disclosure. The apparatus may be applied to a network device.

As shown in FIG. 13, the coordination cell beam measurement apparatus 1300 may include a sending module 1301

The sending module 1301 is configured to send indication information to a user equipment (UE), in which the indication information includes a first transmission power of a coordination cell, in which the UE obtains a first beam measurement result of the coordination cell according to the first transmission power.

The coordination cell beam measurement apparatus provided in the embodiment of the present disclosure, the network device sends the indication information to the UE, and the indication information includes the first transmission power of the coordination cell, and the UE obtains the first beam measuring result of the coordination cell according to the first transmission power. Therefore, the UE may perform the beam measurement on the coordination cell and obtain the beam measurement result of the coordination cell, and the UE determines the beam measurement result of the coordination cell in combination with the transmission power of the coordination cell, thus ensuring the accuracy and timeliness of the beam measurement result.

In order to realize the above-mentioned embodiments, the present disclosure also provides a communication device.

The communication device provided in the embodiment of the present disclosure includes a processor, a transceiver, a memory and an executable program stored in the memory and capable of being run by the processor, in which the processor is configured to execute the above-mentioned method when running the executable program.

The communication device may be the above-mentioned UE, or network device.

The processor may include various types of storage medium, which are non-temporary computer storage medium that may continue to memorize information stored thereon after the communication device is powered down. Here, the communication device includes a UE, or a network device.

The processor may be connected to the memory through a bus or the like, for reading the executable program stored on the memory, for example, as shown in at least one of FIGS. 1 to 11.

In order to implement the above-mentioned embodiments, the present disclosure also provides a computer storage medium.

The computer storage medium provided in the embodiment of the present disclosure having stored therein executable programs that, when executed by a processor, cause the above-mentioned method for determining the uplink transmission resource, for example, as shown in at least one of FIGS. 1 to 11, to be implemented.

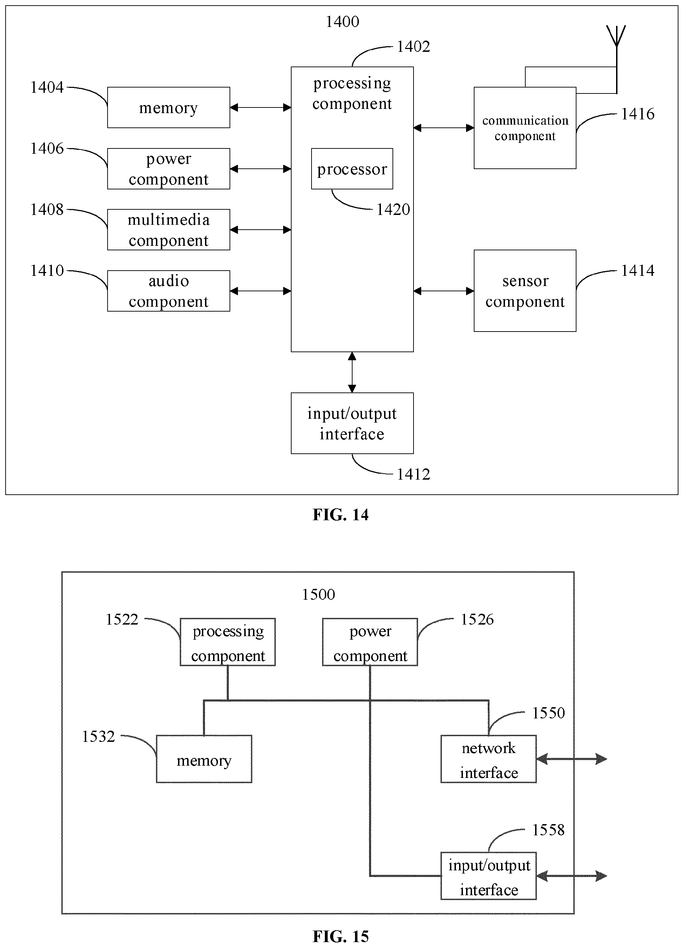

FIG. 14 is a block diagram of a UE 1400 provided in an embodiment of the present disclosure. For example, the UE 1400 can be a mobile phone, a computer, a digital broadcast user equipment, a messaging device, a game console, a tablet device, a medical device, a fitness device, a personal digital assistant, or the like.

Referring to FIG. 14, the UE 1400 may include at least of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the UE 1400, such as the operations associated with display, phone calls, data communications, camera operations, and recording operations. The processing component 1402 can include at least one processor 1420 to execute instructions to perform all or some of the steps in the above-described methods. Moreover, the processing component 1402 may include at least one module which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the UE 1400. Examples of such data include instructions for any applications or methods operated on the UE 1400, contact data, phonebook data, messages, pictures, videos, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the UE 1400. The power component 1406 may include a power management system, at least one power source, and any other components associated with the generation, management, and distribution of power in the UE 1400.

The multimedia component 1408 includes a screen providing an output interface between the UE 1400 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a wake up time and a pressure associated with the touch or swipe action. In some embodiments, the multimedia component 1408 includes a front camera and/or a rear camera. The front camera and/or the rear camera may receive an external multimedia datum while the UE 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone (MIC) configured to receive an external audio signal when the UE 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1414 provides an interface between the processing component 1402 and peripheral interface modules, such as keyboards, click wheels, buttons, and the like. The buttons may include, but are not limited to, a home button, a volume button, a starting button, and a locking button.

The sensor component 1414 includes at least one sensor to provide status assessments of various aspects of the UE 1400. For instance, the sensor component 1414 may detect an open/closed status of the UE 1400, relative positioning of components, e.g., the display and the keypad, of the UE 1400, a change in position of the UE 1400 or a component of the UE 1400, a presence or absence of user contact with the UE 1400, an orientation or an acceleration/deceleration of the UE 1400, and a change in temperature of the UE 1400. The sensor component 1414 may include a proximity sensor configured to detect the presence of nearby objects without any physical contact. The sensor component 1414 may further include a light sensor, such as a CMOS or CCD image sensor, for use in imaging applications. In some embodiments, the sensor component 1414 may further include an accelerometer sensor, a gyroscope sensor, a magnetic sensor, a pressure sensor, or a temperature sensor.

The communication component 1416 is configured to facilitate communication, wired or wireless, between the UE 1400 and other devices. The UE 1400 can access a wireless network based on a communication standard, such as WiFi, 2G, or 3G, or a combination thereof. In an illustrative embodiment, the communication component 1416 receives a broadcast signal or broadcast associated information from an external broadcast management system via a broadcast channel. In an illustrative embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1400 may be implemented with at least one application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic elements, for performing any one of the methods in the above-mentioned FIGS. 1 to 10.

In an illustrative embodiment, there is also provided a non-transitory computer readable storage medium including instructions, such as included in the memory 1404, executable by the processor 1420 in the UE 1400, for completing any one of the methods in the above-mentioned FIGS. 1 to 10. For example, the non-transitory computer-readable storage medium may be a ROM, a random access memory (RAM), a CD-ROM, a magnetic tape, a floppy disc, an optical data storage device, and the like.

As shown in FIG. 15, FIG. 15 is a schematic diagram of a network device provided in an embodiment of the present disclosure. Referring to FIG. 15, the network device 1500 includes a processing component 1522, which further includes at least one processor, and memory resources represented by a memory 1532 for storing instructions executable by the processing component 1522, such as an application program. The application program stored in the memory 1532 may include one or more modules each corresponding to a set of instructions. In addition, the processing component 1522 is configured to execute instructions to perform any of the above-mentioned methods performed by the network side device, for example, the method shown in FIG. 11.

The network device 1500 may further include a power component 1526 configured to perform power management of the network device 1500, a wired or wireless network interface 1550 configured to connect the network device 1500 to a network, and an input/output (I/O) interface 1558. The network device 1500 may operate based on an operating system stored in the memory 1532, such as Windows Server ^{™}, Mac OS X^{™}, Unix^{™}, Linux^{™}, FreeBSD^{™} or the like.

Other embodiments of the disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A coordination cell beam measurement method, applied to a user equipment (UE), comprising:
receiving indication information sent by a network device, wherein the indication information comprises a first transmission power of a coordination cell;
performing a beam measurement on the coordination cell; and
obtaining a first beam measurement result of the coordination cell according to the first transmission power.

2. The method of claim 1, further comprising: determining a beam measurement reference signal resource of the coordination cell, and obtaining a second beam measurement result of the coordination cell according to the beam measurement reference signal resource of the coordination cell.

3. The method of claim 2, wherein the first beam measurement result is obtained according to the second beam measurement result and the first transmission power.

4. The method of claim 2, further comprising:
sending a beam measurement result to the network device, wherein the beam measurement result comprises at least one of:
the first beam measurement result; or
the second beam measurement result.

5. The method of claim 4, wherein the beam measurement result further comprises a beam measurement result of a serving cell.

6. The method of claim 5, wherein the beam measurement result of the serving cell comprises a third beam measurement result of the serving cell and/or a fourth beam measurement result of the serving cell.

7. The method of claim 6, further comprising:
determining a beam measurement reference signal resource of the serving cell; and
performing a beam measurement according to the beam measurement reference signal resource of the serving cell to obtain the third beam measurement result of the serving cell.

8. The method of claim 6, further comprising:
receiving transmission power information of the serving cell; and
obtaining the fourth beam measurement result of the serving cell according to the third beam measurement result of the serving cell and the transmission power information of the serving cell.

9. The method of claim 4 or 5, wherein a manner for reporting the beam measurement result comprises at least one of:
periodic reporting;
non-periodic reporting; or
semi-persistent reporting.

10. The method of claim 5, wherein the beam measurement result is reported by at least one group.

11. The method of claim 10, wherein each group in the at least one group corresponds to at least one of:
a beam group identifier (ID);
a physical cell identifier (PCI);
a control resource set pool index (CORESETPoolIndex);
a reference signal resource set ID;
a reference signal resource ID;
a transmission reception point (TRP) ID; or
an antenna panel ID.

12. The method of claim 10, wherein beams in the group are beams which can be received by the UE simultaneously, or beams between different groups are beams which can be received by the UE simultaneously.

13. The method of claim 4, wherein sending the beam measurement result to the network device comprises:
sending the beam measurement result to the network device, in response to a reporting condition being satisfied.

14. The method of any one of claims 1 to 4, further comprising:
the beam measurement result comprising at least one of:
a layer 1-reference signal receiving power (L1-RSRP);
a layer 1-signal to interference plus noise ratio (L1-SINR);
a correction value of a L1-RSRP based on the first transmission power of the coordination cell;
a correction value of a L1-SINR based on the first transmission power of the coordination cell;
a correction value of a L1-RSRP based on an uplink transmission power of the UE; or
a correction value of a L1-SINR based on an uplink transmission power of the UE.

15. The method of claim 1, wherein the first transmission power of the coordination cell comprises at least one of:
a transmission power value of the coordination cell; or
a difference between the transmission power of the coordination cell and a transmission power of a serving cell.

16. The method of claim 13, wherein the reporting condition is:
a beam measurement result of the coordination cell being greater than a first threshold.

17. The method of claim 13, wherein the reporting condition is:
sorting the beam measurement results of the coordination cell and the beam measurement results of the serving cell from strong to weak, wherein the beam measurement results of the coordination cell are top N beam measurement results, where N is a positive integer.

18. The method of claim 13, wherein the reporting condition is:
sorting the beam measurement results of the coordination cell from strong to weak, and reporting top M beam measurement results of the coordination cell, where M is a positive integer.

19. A coordination cell beam measurement method, applied to a network device, comprising:
sending indication information to a user equipment (UE), wherein the indication information comprises a first transmission power of a coordination cell;
wherein the UE obtains a first beam measurement result of the coordination cell according to the first transmission power.

20. A coordination cell beam measurement apparatus, comprising:
a receiving module configured to receive indication information sent by a network device, wherein the indication information comprises a first transmission power of a coordination cell;
a measuring module configured to perform a beam measurement on the coordination cell; and
an acquiring module configured to acquire a first beam measurement result of the coordination cell according to the first transmission power.

21. A coordination cell beam measurement apparatus, comprising:
a sending module configured to send indication information to a user equipment (UE), wherein the indication information comprises a first transmission power of a coordination cell;
wherein the UE acquires a first beam measurement result of the coordination cell according to the first transmission power.

22. A communication device, comprising:
a transceiver;
a memory; and
a processor connected to the transceiver and the memory, respectively, and configured to control wireless signal transmission and reception of the transceiver and be capable of implementing the coordination cell beam measurement method of any one of claims 1 to 18, or the coordination cell beam measurement method of claim 19 by executing computer-executable instructions on the memory.

23. A computer storage medium having stored therein computer-executable instructions that, after executed by a processor, cause the coordination cell beam measurement method of any one of claims 1 to 18, or the coordination cell beam measurement method of claim 19 to be implemented.
